(19) Europäisches Patentamt
European Patent Office
Office européen des brevets

(11) **EP 4 216 176 B1**

(12) **EUROPEAN PATENT SPECIFICATION**

(45) Date of publication and mention
of the grant of the patent:
**25.02.2026 Bulletin 2026/09**

(21) Application number: **23151707.9**

(22) Date of filing: **16.01.2023**

(51) International Patent Classification (IPC):
*G06V 40/10* (2022.01)    *G06V 20/58* (2022.01)
*G06V 10/50* (2022.01)    *G06T 7/66* (2017.01)

(52) Cooperative Patent Classification (CPC):
**G06V 40/103; G06V 10/50; G06V 20/58**

(54) **IMAGE PROCESSING DEVICE OF PERSON DETECTION SYSTEM**

BILDVERARBEITUNGSVORRICHTUNG EINES PERSONENERKENNUNGSSYSTEMS

DISPOSITIF DE TRAITEMENT D'IMAGE DE SYSTÈME DE DÉTECTION DE PERSONNE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **24.01.2022 JP 2022008778**

(43) Date of publication of application:
**26.07.2023 Bulletin 2023/30**

(73) Proprietor: **KABUSHIKI KAISHA TOYOTA
JIDOSHOKKI
Kariya-shi, Aichi 448-8671 (JP)**

(72) Inventors:
• **ISHIZAKI, Masataka
Kariya-shi, Aichi, 448-8671 (JP)**
• **MIHOICHI, Takuto
Kariya-shi, Aichi, 448-8671 (JP)**

(74) Representative: **Hoffmann Eitle
Patent- und Rechtsanwälte PartmbB
Arabellastraße 30
81925 München (DE)**

(56) References cited:
**EP-A1- 2 224 743    JP-A- 2020 135 616**

• **CHIEN JONG-CHIH ET AL: "An integrated driver
warning system for driver and pedestrian
safety", APPLIED SOFT COMPUTING,
ELSEVIER, AMSTERDAM, NL, vol. 13, no. 11, 5
July 2013 (2013-07-05), pages 4413 - 4427,
XP028697025, ISSN: 1568-4946, DOI: 10.1016/
J.ASOC.2013.06.008**

**Description**

BACKGROUND ART

The present invention relates to an image processing device of a person detection system.

An obstacle detector for detecting an obstacle is mounted on a moving body such as a vehicle. In Japanese Patent Application Publication No. 2020-135616, an obstacle detector includes a camera and an image processing device. The image processing device obtains image data from the camera. The image processing device detects an area in which an obstacle appears, in the image data obtained from the camera. The image processing device performs a person detection process for the area in which the obstacle appears. The person detection process is performed using HOG (Histogram of Oriented Gradients) features, for example.

According to "An integrated driver warning system for driver and pedestrian safety" by Chien Jong-Chih et al. (Applied Soft Computing, Elsevier, vol. 13, no. 11, 5 July 2023, pp. 4413-4427), a semi-integrated system for driver assistance and pedestrian safety is composed of a single camera which focuses on the driver for picking up visual cues, and a stereo rig that focus on the road ahead for the detection of road obstructions and pedestrians. When the vehicle is moving slowly, the system can detect the existence of a pedestrian ahead and warn the driver if the pedestrian moves in front of the car.

According to EP 2 224 743 A1, a vehicle periphery monitoring device monitors a periphery of a vehicle using images representing a peripheral condition of the vehicle obtained through an imaging device, e.g., a single infrared camera, mounted on the vehicle. The objects detected include living substances such as human being (pedestrian), and artificial structural objects such as other vehicles.

Accuracy of person detection may decrease depending on an area in which the image processing device performs detection from the image data and a position of a person included in the area.

**SUMMARY**

In accordance with an aspect of the present invention, there is provided an image processing device of a person detection system mounted on a moving body, the image processing device configured to: detect, in image data obtained from a camera, an area of the image data in which an obstacle appears; perform a center-of-gravity area-width adjustment process in which a position of center of gravity of the obstacle in the area of the image data is estimated and a width of the area of the image data is adjusted based on the position of center of gravity; and determine whether the obstacle in the area is a person by comparing a post-adjustment area obtained after the center-of-gravity area-width adjustment process is performed with dictionary data.

Other aspects and advantages of the invention will become apparent from the following description, taken in conjunction with the accompanying drawings, illustrating by way of example the principles of the invention.

BRIEF DESCRIPTION OF THE DRAWINGS

The invention, together with objects and advantages thereof, may best be understood by reference to the following description of the embodiments together with the accompanying drawings in which:

FIG. 1 is a side view of a forklift truck;

FIG. 2 is a schematic block diagram of the forklift truck and a person detection system;

FIG. 3 is a flowchart illustrating an obstacle detection process performed by an image processing device;

FIG. 4 is a diagram illustrating one example of first image data;

FIG. 5 is a flowchart illustrating a person detection process performed by the image processing device;

FIG. 6 is a diagram for explaining a whole-body detection process;

FIG. 7 is a flowchart illustrating an upper body detection process performed by the image processing device;

FIG. 8 is a diagram illustrating a rectangular area;

FIG. 9 is a diagram illustrating a correspondence relationship between a width of the rectangular area in a world coordinate system and a first correction rate;

FIG. 10 is a diagram illustrating a post-adjustment area;

FIG. 11 is a diagram illustrating a correspondence relationship between a width of a post-adjustment area in the world coordinate system and a second correction rate;

FIG. 12 is a diagram illustrating a post-adjustment area in which the width of the post-adjustment area in the world coordinate system is equal to or higher than an upper limit value;

FIG. 13 is a diagram illustrating a post-adjustment area in which the width of the post-adjustment area in the world coordinate system is equal to or smaller than a lower limit value;

FIG. 14 is a diagram illustrating a correspondence relationship between a height of an upper end of the rectangular area and a correction amount;

FIG. 15 is a diagram for explaining an upper body detection process; and

FIG. 16 is a flowchart illustrating a person detection process according to a modified embodiment.

DETAILED DESCRIPTION OF THE EMBODIMENTS

The following will describe an embodiment of an image processing device of a person detection system.

Forklift Truck

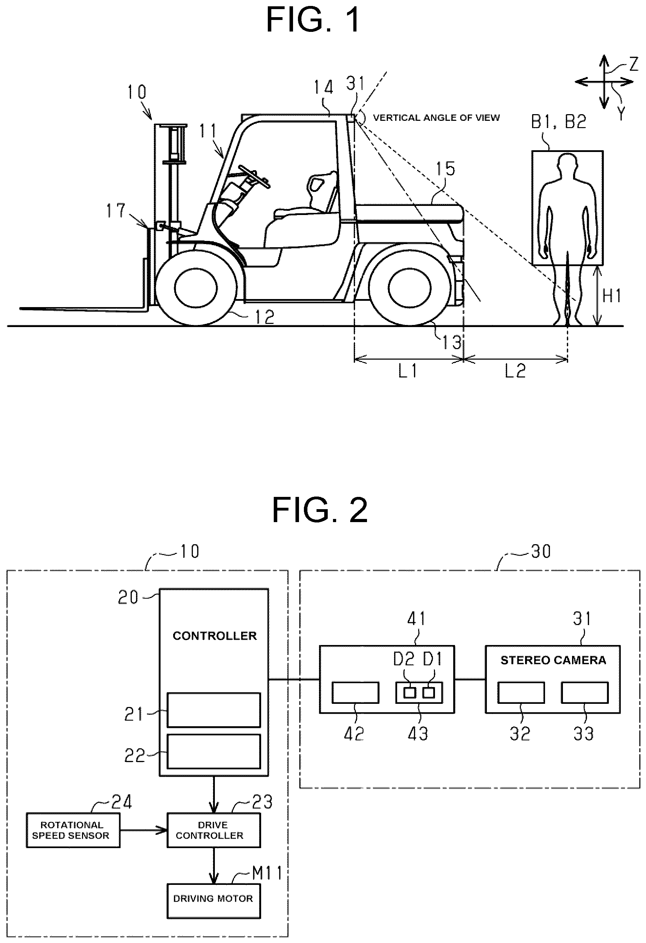

As illustrated in FIG. 1, a forklift truck 10 serving as a moving body includes a vehicle body 11, driving wheels 12, steering wheels 13, and a cargo handling apparatus 17. The vehicle body 11 includes a head guard 14 and a counterweight 15. The head guard 14 is provided above a driver seat. The counterweight 15 is provided at a rear part of the vehicle body 11. The counterweight 15 is a member for balancing a cargo loaded in the cargo handling apparatus 17. The forklift truck 10 may be operated in response to an operation by an operator, may be operated automatically, or may be switchable between a manual operation and an automatic operation. The forklift truck 10 is an example of an industrial vehicle.

As illustrated in FIG. 2, the forklift truck 10 includes a controller 20, a driving motor M11, a drive controller 23 controlling the driving motor M11, and a rotational speed sensor 24. The controller 20 controls a drive operation and a cargo handling operation. The controller 20 includes a processor 21 and a memory 22. The processor 21 is a CPU (Central Process Unit), a GPU (Graphics Process Unit), a DSP (Digital Signal Processor), or the like. The memory 22 has a RAM (Random Access Memory) and a ROM (Read Only Memory). The memory 22 stores programs for operating the forklift truck 10. The memory 22 stores program codes or commands configured to cause the processor 21 to execute processes. The memory 22, which is a computer readable medium, includes any available medium that is accessible by a general-purpose computer or a dedicated computer. The controller 20 may include a hardware circuit such as an ASIC (Application Specific Integrated Circuit), an FPGA (Field Programmable Gate Array), and the like. The controller 20, which is a process circuit, may include one or more processors for operating in accordance with the computer programs, one or more hardware circuits such as the ASIC and the FPGA, or a combination thereof.

The controller 20 gives the drive controller 23 a command for a rotational speed of the driving motor M11 such that a vehicle speed of the forklift truck 10 reaches a target vehicle speed. The drive controller 23 of the present embodiment is a motor driver. The rotational speed sensor 24 outputs the rotational speed of the driving motor M11 to the drive controller 23. In response to the command from the controller 20, the drive controller 23 controls the driving motor M11 such that the rotational speed of the driving motor M11 matches the command.

Person Detection System

A person detection system 30 is mounted on the forklift truck 10. The person detection system 30 includes a stereo camera 31 serving as a camera, and an image processing device 41. The person detection system 30 detects a person that is present around the forklift truck 10. The person detection system 30 may detect, in addition to the person, an obstacle other than the person. The image processing device 41 is an image processing device of the person detection system 30.

Stereo Camera

As illustrated in FIG. 1, the stereo camera 31 is disposed such that a road surface on which the forklift truck 10 is traveling can be seen from above the forklift truck 10. The stereo camera 31 is disposed in the head guard 14, for example. The stereo camera 31 captures an image of a rear area of the forklift truck 10. Thus, a person detected by the person detection system 30 is a person behind the forklift truck 10. The stereo camera 31 captures an imaging range defined by a horizontal angle of view and a vertical angle of view. The counterweight 15 is included in a range of the vertical angle of view. Thus, a part of the counterweight 15 that is a part of the forklift truck 10 is always included in the image captured by the stereo camera 31.

As illustrated in FIG. 2, the stereo camera 31 includes a first camera 32 and a second camera 33. Examples of the first camera 32 and the second camera 33 include cameras using a CCD image sensor and a CMOS image sensor. The first camera 32 and the second camera 33 are arranged such that their optical axes are parallel to each other. Image data obtained by capturing of the image by the first camera 32 is referred to as first image data, and image data obtained by capturing of the image by the second camera 33 is referred to as second image data.

Image Processing Device

The image processing device 41 has a processor 42 such as a CPU, a GPU, or a DSP, and a memory 43 including a RAM and a ROM. The memory 43 stores various programs for detecting an obstacle from an image captured by the stereo camera 31. The memory 43 stores program codes or commands configured to cause the processor 42 to execute processes. The memory 43, which is a computer readable medium, includes any available medium that is accessible by a general-purpose computer or a dedicated computer. The image processing device 41 may include a hardware circuit such as an ASIC or an FPGA. The image processing device 41, which is a process circuit, may include one or more processors for operating in accordance with the computer programs, one or more hardware circuits such as the ASIC and the FPGA, or a combination thereof.

Dictionary Data

The memory 43 stores whole-body dictionary data D1 and upper body dictionary data D2. The whole-body dictionary data D1 is dictionary data for detecting a person. The whole-body dictionary data D1 is, for example, data of features extracted from a plurality of known image data in which the person appears. The whole-body dictionary data D1 of the present embodiment is dictionary data obtained from image data in which a whole body of the person appears. Examples of the features include HOG (Histograms of Oriented Gradients) features and CoHOG (Co-occurrence HOG) features. In the present embodiment, the HOG features are used. The HOG features each correspond to a histogram of a gradient intensity in a gradient orientation of a pixel value of a cell in the image data. The cell is a local area having a predetermined size. When the HOG features are calculated, the image data is divided into a plurality of cells. Then, for each cell, the histogram in the gradient orientation of the pixel value is calculated and normalized within a block that is a predetermined range around the cell. Thus, the HOG features can be obtained. The upper body dictionary data D2 is dictionary data of features extracted from image data in which an upper body of the person appears. The same process for obtaining the whole-body dictionary data D1 is performed on the image data in which the upper body of the person appears to obtain the upper body dictionary data D2. When the image processing device 41 includes an auxiliary memory, the auxiliary memory may store at least one of the whole-body dictionary data D1 and the upper body dictionary data D2.

Obstacle Detection Process

The following will describe an obstacle detection process performed by the image processing device 41. The processor 42 executes the programs stored in the memory 43 to perform the obstacle detection process. The obstacle detection process is repeatedly performed at a predetermined control cycle.

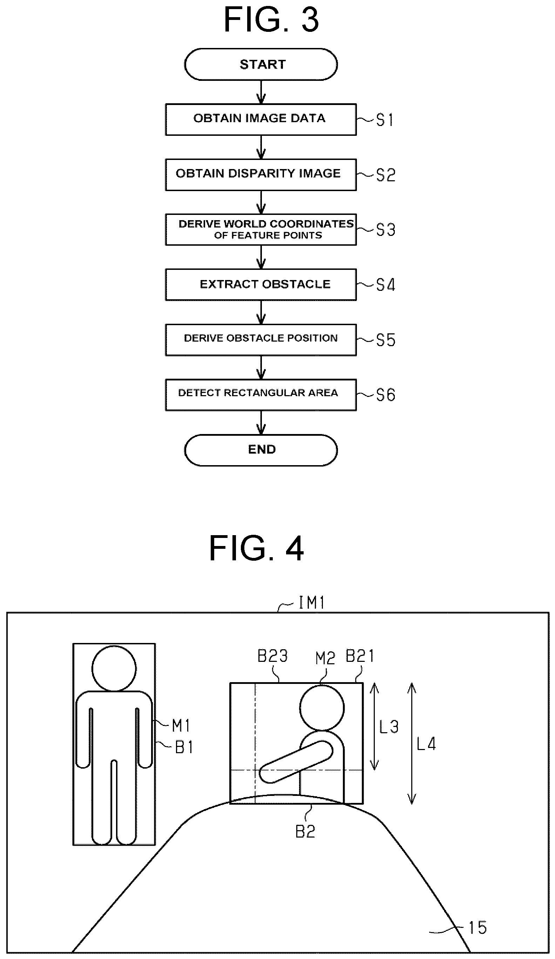

As illustrated in FIG. 3, in Step S1, the image processing device 41 obtains the first image data and the second image data each having the same frame, from an image captured by the stereo camera 31.

Next, in Step S2, the image processing device 41 performs a stereo process to obtain a disparity image. The disparity image is an image in which a disparity [px] is associated with a pixel. The first image data and the second image data are compared with each other, and a difference in number of pixels between the first image data and the second image data is calculated for the same feature point in each of the first image data and the second image data, so that a disparity is obtained. The feature point corresponds to a point that is visually recognized as a border such as an edge of an obstacle. The feature point is detected from information of brightness, or the like.

The image processing device 41 converts RGB into YCrCb using the RAM temporarily storing each of the first image data and the second image data. The image processing device 41 may perform a distortion correction, an edge enhancement process, and the like. The image processing device 41 performs a stereo process in which a disparity is obtained by comparing similarity between each pixel of the first image data and each pixel of the second image data. In the stereo process, the disparity may be calculated for each pixel, or may be calculated using a block-matching algorithm. In the block-matching algorithm, each of the first image data and the second image data is divided into a plurality of blocks including a plurality of pixels to calculate the disparity for each block. The image processing device 41 obtains the disparity image based on the first image data as a reference image and the second image data as a comparison image. For each pixel of the first image data, the image processing device 41 extracts one of pixels of the second image data that is most similar to one of pixels of the first image data. Then, the image processing device 41 calculates a difference in horizontal pixel counts between the one of pixels of the first image data and the one of pixels of the second image data that is most similar to the one of pixels of the first image data as a disparity, which obtains the disparity image in which the disparity is associated with each pixel of the first image data that is the reference image. The disparity image need not be displayed, and may be data in which the disparity is associated with each pixel of the disparity image. The image processing device 41 may perform a process in which a disparity of a road surface is removed from the disparity image.

Next, in Step S3, the image processing device 41 derives coordinates of feature points in a world coordinate system. Firstly, the image processing device 41 derives coordinates of feature points in a camera coordinate system. In the camera coordinate system, the stereo camera 31 is defined as an original point. The camera coordinate system is a cartesian coordinate system consisting of three axes, a Z-axis corresponding to an optical axis, an X-axis and a Y-axis corresponding to two axes perpendicular to the optical axis, respectively. The coordinates of the feature points in the camera coordinate system are represented by a Z-coordinate Zc, an X-coordinate Xc, and a Y-coordinate Yc in the camera coordinate system. The Z-coordinate Zc, the X-coordinate Xc, and the Y-coordinate Yc are derived using the following equations (1) to (3).

Equation 1

$$Zc = \frac{B \times f}{d} \cdots (1)$$

Equation 2

$$Xc = (xp - x') \times \frac{Zc}{f} \cdots (2)$$

Equation 3

$$Yc = (yp - y') \times \frac{Zc}{f} \cdots (3)$$

In the equations (1) to (3), "B" represents a baseline length [mm], "f" represents a focal distance [mm], "d" represents a disparity [px], "xp" represents an arbitrary X-coordinate in a disparity image, "x'" represents an X-coordinate of a center coordinate in the disparity image, "yp" represents an arbitrary Y-coordinate in the disparity image, and "y'" represents a Y-coordinate of the center coordinate in the disparity image.

"xp" is defined as an X-coordinate of a feature point in the disparity image, "yp" is defined as a Y-coordinate of the feature point in the disparity image, and "d" is defined as a disparity associated with the X-coordinate and the Y-coordinate of the feature point. Thus, the coordinates of the feature point in the camera coordinate system are derived.

Here, the world coordinate system is a coordinate system in a real space and is a cartesian coordinate system consisting of three axes, an X-axis corresponding to an axis extending in a horizontal direction, specifically in a vehicle width direction of the forklift truck 10, a Y-axis corresponding to an axis extending in the horizontal direction, specifically in a direction perpendicular to the X-axis, and a Z-axis corresponding to an axis perpendicular to the X-axis and the Y-axis, in a state where the forklift truck 10 is positioned on a horizontal plane. The Y-axis in the world coordinate system is also an axis extending in a front-rear direction of the forklift truck 10 that is a traveling direction of the forklift truck 10. The Z-axis in the world coordinate system is also an axis extending in a vertical direction. Coordinate of a feature point in the world coordinate system are represented by an X-coordinate Xw, a Y-coordinate Yw, and a Z-coordinate Zw in the world coordinate system.

The image processing device 41 uses the following equation 4 to perform a world coordinate conversion that is conversion from camera coordinates into world coordinates. The world coordinates are coordinates in the world coordinate system.

Equation 4

$$\begin{pmatrix} Xw \\ Yw \\ Zw \end{pmatrix} = \begin{pmatrix} 1 & 0 & 0 \\ 0 & \cos\theta & -\sin\theta \\ 0 & \sin\theta & \cos\theta \end{pmatrix} \begin{pmatrix} Xc \\ Yc \\ Zc \end{pmatrix} + \begin{pmatrix} 0 \\ 0 \\ H \end{pmatrix} \ldots (4)$$

Here, "H" in the equation (4) is a mounting height [mm] of the stereo camera 31 in the world coordinate system, and "θ" is an angle obtained by adding 90° to an angle defined by the optical axes of the first camera 32 and the second camera 33 parallel to each other and the horizontal plane.

In the present embodiment, an original point in the world coordinate system corresponds to coordinates in which the X-coordinate Xw and the Y-coordinate Yw represent a position of the stereo camera 31 and the Z-coordinate Zw represents the road surface. The position of the stereo camera 31 is an intermediate position between a lens of the first camera 32 and a lens of the second camera 33, for example.

Among the world coordinates obtained by the world coordinate conversion, the X-coordinate Xw represents a distance from the original point to a feature point in the vehicle width direction of the forklift truck 10. The Y-coordinate Yw represents a distance from the original point to the feature point in the traveling direction of the forklift truck 10. The Z-coordinate Zw represents a height from the road surface to the feature point. The feature point is a point representing a part of an obstacle. A Y-axis in the following description is in the world coordinate system. In FIG. 1, an arrow Y represents the Y-axis in the world coordinate system, an arrow Z represents a Z-axis in the world coordinate system.

Next, in Step S4, the image processing device 41 extracts an obstacle existing in the world coordinate system. The image processing device 41 defines, as one point group, a set of feature points assumed to represent the same obstacle among the feature points representing a part of the obstacle, and extracts the one point group as the obstacle. For example, the image processing device 41 performs clustering to define the feature points positioned within a predetermined range as one point group from the world coordinates of the feature points derived in Step S3. The image processing device 41 recognizes the clustered point group as one obstacle. The clustering of the feature points in Step S4 is performed by various methods. That is, the clustering may be performed by any method as long as the feature points are defined as one point group and thus recognized as the obstacle.

Next, in Step S5, the image processing device 41 derives a position of the obstacle extracted in Step S4. The image processing device 41 recognizes world coordinates of the obstacle from the world coordinates of the feature points forming the clustered point group. An X-coordinate Xw, a Y-coordinate Yw, and a Z-coordinate Zw of each feature point located at an end of the clustered point group may correspond to those of the obstacle, or an X-coordinate Xw, a Y-coordinate Yw, and a Z-coordinate Zw of a feature point as a center of the point group may correspond to those of the obstacle, for example. That is, the coordinates of the obstacle in the world coordinate system may represent the entire obstacle or one point of the obstacle.

Next, in Step S6, the image processing device 41 detects a position of the obstacle in the first image data. The position of the obstacle in the first image data may be detected from the disparity image. The position of the obstacle in the first image data are represented in an area indicating a range of the first image data. The area of the present embodiment is a rectangular area. The rectangular area is an area including the obstacle in the first image data. In the first image data obtained from the stereo camera 31, the area in which the obstacle appears is detected. The image processing device 41 associates the rectangular area with world coordinates of the obstacle derived in Step S6. For example, the image processing device 41 converts from the world coordinates into camera coordinates of the obstacle, and converts from the camera coordinates of the obstacle into coordinates of the first image data. As a result, the world coordinate of the obstacle is associated with the rectangular area. That is, the image processing device 41 can obtain world coordinates of the rectangular area. A Z-coordinate Zw of the rectangular area represents a height of the rectangular area from the road surface. That is, the image processing device 41 detects the height of the rectangular area from the road surface. The height of the rectangular area from the road surface includes a height of a lower end of the rectangular area from the road surface and a height of an upper end of the rectangular area from the road surface.

In the following description, the position of the obstacle corresponds to a position in the world coordinate system, i.e., world coordinates, and also corresponds to a position of the rectangular area. The position of the obstacle in first image data is in an image coordinate system. The image coordinate system represents pixel positions of the first image data. In the image coordinate system, an X-axis represents a horizontal direction, and a Y-axis represents a vertical direction. The position of the obstacle in the first image data also corresponds to a position of the rectangular area of the first image data. In the following description, an X-coordinate Xi represents the X-coordinate in the image coordinate system, and a Y-coordinate Yi represents the Y-coordinate in the image coordinate system, as appropriate.

Person Detection Process

The image processing device 41 performs a person detection process for the rectangular area. In the following, as an example, rectangular areas B1, B2 are obtained by the obstacle detection process, as illustrated in FIG. 4. In FIG. 4, first image data IM1 includes a person M1 whose whole body appears and a person M2 whose lower body is hidden by the counterweight 15. In FIG. 4, the Y-coordinate Yi of a lower end of each of the rectangular areas B1, B2 in the first image data IM1 represents the lowest part of the obstacle in the first image data IM1. The Y-coordinate Yi of an upper end of each of the rectangular areas B1, B2 in the first image data IM1 represents a top of the obstacle in the first image data IM1.

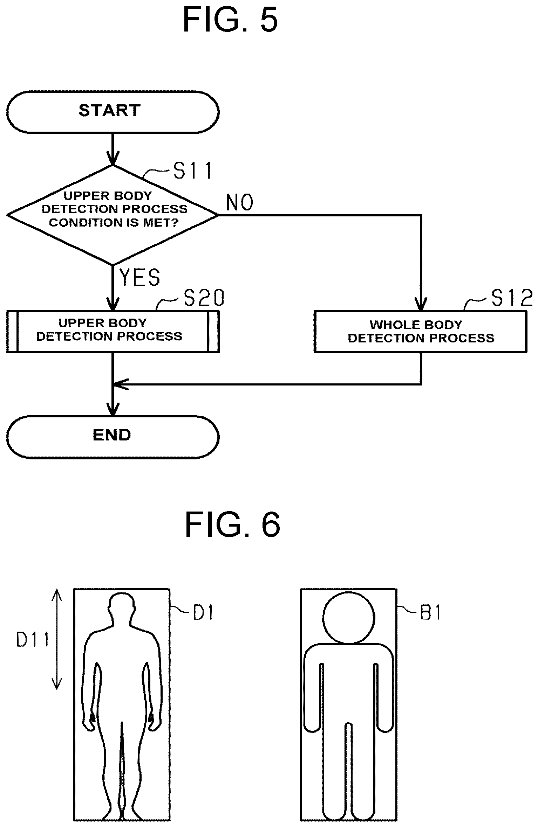

As illustrated in FIG. 5, in Step S11, the image processing device 41 determines whether the rectangular areas B1, B2 meet an upper body detection process condition. The upper body detection process condition is for determining whether the obstacle hidden by an obstruction such as the counterweight 15 appears in the first image data IM1. Specifically, the upper body detection process condition is for classifying an obstacle that may be a person whose upper body appears in the first image data IM1 and whose lower body is hidden by the obstruction, and another obstacle other than the obstacle that is such a person. When both a distance condition and a separation condition are met, the image processing device 41 determines that the rectangular areas B1, B2 meet the upper body detection process condition.

The distance condition means that a distance from a rear end of the forklift truck 10 to an obstacle is within a predetermined range. The separation condition means that an obstacle is distanced from the road surface at a predetermined height or more. As illustrated in FIG. 1, whether the distance condition is met is determined from a distance to the obstacle in a Y-axis direction. The distance to the obstacle is a distance from the rear end of the forklift truck 10 to a central position of each of the rectangular areas B1, B2 in the Y-axis direction. A distance L1 from the stereo camera 31 to the rear end of the forklift truck 10 in the Y-axis direction is known. The memory 43 pre-stores the distance L1 from the stereo camera 31 to the rear end of the forklift truck 10 or the Y-coordinate Yw of the rear end of the forklift truck 10, so that the image processing device 41 derives a distance L2 from the rear end of the forklift truck 10 to the rectangular areas B1, B2 in the Y-axis direction. Then, when the distance L2 is within a predetermined distance, the image processing device 41 determines that the distance condition is met. The predetermined distance of the distance condition is set based on resolution of the stereo camera 31 and the dictionary data D1, D2, for example. As the resolution of the stereo camera 31 increases, features to be obtained increases, which increases the predetermined distance. As a distance from the obstacle to the stereo camera 31 increases, a size of the obstacle in the first image data IM1 is reduced. Therefore, a person detectable distance is changed depending on pixel counts of image data that is used when the dictionary data D1, D2 are obtained. The predetermined distance may be changed depending on the person detectable distance. The Y-coordinate Yw of the obstacle represents a distance from the stereo camera 31 to the obstacle. Therefore, the distance condition determines whether the distance from the stereo camera 31 to the obstacle is within the predetermined range.

Whether the separation condition is met is determined from the Z-coordinate Zw of the lower end of each of the rectangular areas B1, B2. An original point of the Z-coordinate Zw corresponds to the road surface. Thus, the Z-coordinate Zw of the lower end of each of the rectangular areas B1, B2 represents a height H1 at which the obstacle is distanced from the road surface. As illustrated in FIG. 1, when the obstacle is hidden by the counterweight 15, a lower part of the obstacle is a blind spot in an imaging range of the stereo camera 31. When the lower part of the obstacle is hidden by the counterweight 15, in the first image data IM1, the obstacle seems to be distanced from the road surface. A predetermined height is set in accordance with a height of the stereo camera 31 and a position of the counterweight 15, for example. The predetermined height may be a height in a range hidden by the counterweight 15 when the obstacle exists within the predetermined distance. The predetermined height may be changed in accordance with the Y-coordinate Yw of each of the rectangular areas B1, B2. In this case, as the rectangular areas B1, B2 are distanced from the forklift truck 10, the predetermined height may be lowered.

The upper body detection process condition means that the obstacle is distanced from the road surface within the predetermined range from the stereo camera 31. In an example illustrated in FIG. 4, the rectangular area B1 does not meet the upper body detection process condition, and the rectangular area B2 meets the upper body detection process condition.

When a determination result in Step S11 is NO, that is, when the obstacle does not meet the upper body detection process condition, the image processing device 41 performs a process of Step S12. The following will describe Step S12 using the rectangular area B1 as an example.

In Step S12, the image processing device 41 performs a whole-body detection process. As illustrated in FIG. 6, in the whole-body detection process, the rectangular area B1 corresponding to the obstacle that does not meet the upper body detection process condition is compared with the whole-body dictionary data D1. The image processing device 41 extracts features of the rectangular area B1 by the same process as features extraction used for obtaining the whole-body dictionary data D1. In the present embodiment, HOG features are extracted from the rectangular area B1. Then, person detection is performed based on machine learning and pattern matching between the HOG features extracted from the rectangular area B1 and the whole-body dictionary data D1 to determine whether the obstacle in the rectangular area B1 is a person. After the determination of Step S12, the image processing device 41 terminates the person detection process.

The whole-body dictionary data D1 corresponds to whole-body comparison data.

As illustrated in FIG. 5, when the determination result in Step S11 is YES, that is, when the obstacle meets the upper body detection process condition, the image processing device 41 performs an upper body detection process S20. The following will describe the upper body detection process S20 using the rectangular area B2 as an example.

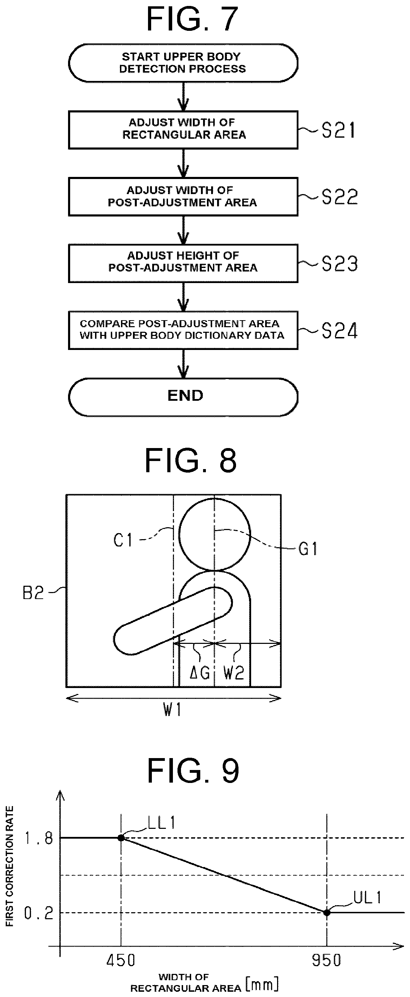

As illustrated in FIG. 7, in Step S21, the image processing device 41 adjusts a width of the rectangular area B2 of the first image data IM1.

As illustrated in FIG. 8, the image processing device 41 estimates a position of center of gravity G1 of the obstacle in the rectangular area B2. The position of center of gravity G1 of the obstacle is estimated from a disparity image, for example. The image processing device 41 estimates the position of center of gravity G1 from distribution of disparities. The image processing device 41 estimates a portion where similar disparities are concentrated and distributed in the Y-axis direction in the image coordinate system, as the position of center of gravity G1 of the obstacle. Feature points appear in a portion where the obstacle exists. Therefore, the position of center of gravity G1 can be estimated using the distribution of the disparities. When the obstacle is a person, the position of center of gravity G1 is likely to be at a position passing through a head of the person.

The image processing device 41 adjusts a width W1 of the rectangular area B2 of the first image data IM1 based on the position of center of gravity G1. The width W1 of the rectangular area B2 of the first image data IM1 is a dimension in the X-axis direction in the image coordinate system. In the following description, the X-axis direction in the image coordinate system may be referred to as a width direction, and the Y-axis direction in the image coordinate system may be referred to as a height direction. The image processing device 41 changes the width W1 of the rectangular area B2 to a width W11 derived from the following equation (5).
Equation 5

$$\text{Width W11} = \text{Distance W2} \times 2 + \text{Difference } \Delta G \times \text{First Correction Rate}$$

$$\dots (5)$$

A distance W2 is, in the rectangular area B2, a distance from the position of center of gravity G1 to one end of the rectangular area B2 in the width direction closer to the position of center of gravity G1 than to the other end of the rectangular area B2. In an example illustrated in FIG. 8, the distance W2 is a distance from the position of center of gravity G1 to a right end of the rectangular area B2. The distance W2 is a difference between an X-coordinate Xi of the position of center of gravity G1 and an X-coordinate Xi of the right end of the rectangular area B2. A difference $\Delta G$ is a distance between a central position C1 of the rectangular area B2 in the width direction and the position of center of gravity G1. The difference $\Delta G$ is a difference between the X-coordinate Xi of the position of center of gravity G1 and the X-coordinate Xi of the central position C1. A first correction rate is defined by a width of the rectangular area B2 in the world coordinate system. The difference $\Delta G$ decreases as the width of the rectangular area B2 in the world coordinate system decreases. Thus, in order to supplement an effect of correction of the difference $\Delta G$, the first correction rate increases as the width of the rectangular area B2 in the world coordinate system decreases.

As illustrated in FIG. 9, the width of the rectangular area B2 in the world coordinate system is associated with the first correction rate. In an example of FIG. 9, an upper limit width UL1 and a lower limit width LL1 are set for the width of the rectangular area B2 in the world coordinate system. A value of the first correction rate is associated with each of the upper limit width UL1 and the lower limit width LL1. The upper limit width UL1 is 950 [mm]. A value smaller than one is associated with the upper limit width UL1 as the first correction rate. The first correction rate associated with the upper limit width UL1 may be arbitrarily set within a range from 0.1 to 0.5, for example. In the example of FIG. 9, 0.2 as the first correction rate is associated with the upper limit width UL1. The lower limit width LL1 is 450 [mm]. A value greater than one is associated with the lower limit width LL1 as the first correction rate. The first correction rate associated with the lower limit width LL1 may be arbitrarily set within a range from 1.5 to 2.2, for example. In the example of FIG. 9, 1.8 as the first correction rate is associated with the lower limit width LL1.

The image processing device 41 derives the first correction rate from the width of the rectangular area B2 in the world coordinate system. When the width of the rectangular area B2 in the world coordinate system is equal to or greater than the upper limit width UL1, the image processing device 41 derives a value associated with the upper limit width UL1 as the first correction rate. When the width of the rectangular area B2 in the world coordinate system is equal to or smaller than the lower limit width LL1, the image processing device 41 derives a value associated with the lower limit width LL1 as the first correction rate. When the width of the rectangular area B2 in the world coordinate system is within a range between the upper limit width UL1 and the lower limit width LL1, the image processing device 41 derives the first correction rate from a value associated with the upper limit width UL1 and a value associated with the lower limit width LL1. For example, the image processing device 41 only needs to derive the first correction rate from a linear function represented by the upper limit width UL1, the lower limit width LL1, a value associated with the upper limit width UL1, and a value associated with the lower limit width LL1.

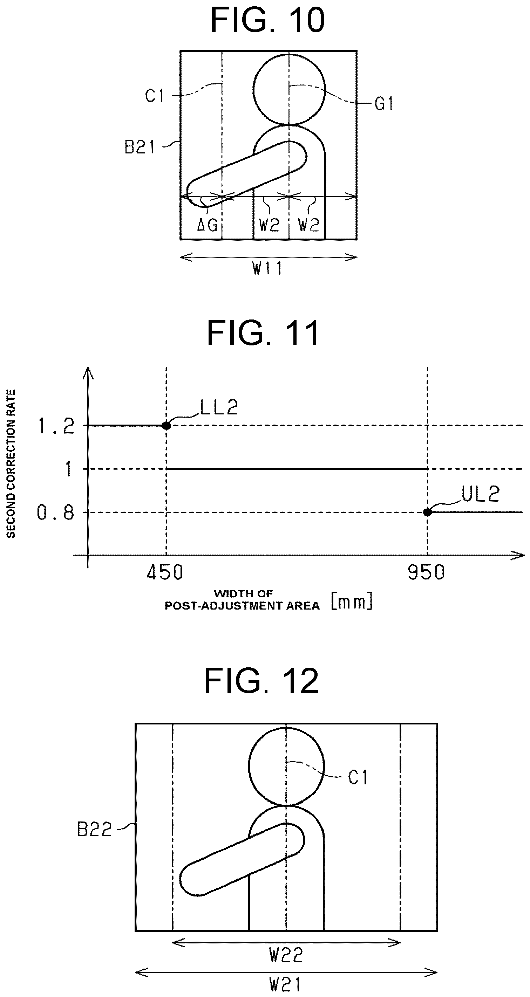

As illustrated in FIG. 10, a post-adjustment area B21 is obtained by a process in Step S21 in which the width of the rectangular area B2 is adjusted. The post-adjustment area B21 is the rectangular area B2 after the width thereof is adjusted. The width W11 of the post-adjustment area B21 is derived from the equation (5). FIG. 10 illustrates the post-adjustment area B21 in which the first correction rate is 1.0, as an example. The post-adjustment area B21 is an area taken out from the rectangular area B2 by the width W11 from one end toward the other end of the rectangular area B2 in the width direction, the one end being close to the position of center of gravity G1, the other end being distanced from the position of center of gravity G1. In the present embodiment, the post-adjustment area B21 is an area taken out from the rectangular area B2 by the width W11 from a right end toward a left end of the rectangular area B2. In Step S21, the width W11 of the post-adjustment area B21 is set by adding a value based on the difference ΔG between the position of center of gravity G1 and the central position C1 of the rectangular area B2 in the width direction to a doubled value of a length of the distance W2 from the position of center of gravity G1 to one end of the rectangular area B2 in the width direction closer to the position of center of gravity G1 than to the other end of the rectangular area B2. In the present embodiment, the value based on the difference ΔG is a value obtained by multiplying the difference ΔG by the first correction rate. The width of the rectangular area B2 in Step S21 is adjusted in order to reduce displacement between the central position C1 of the rectangular area B2 of the first image data IM1 and the position of center of gravity G1 of the obstacle appearing in the rectangular area B2. The process in Step S21 is a center-of-gravity area-width adjustment process.

Next, as illustrated in FIG. 7, in Step S22, the image processing device 41 adjusts the width of the post-adjustment area B21 in the first image data IM1. The width of the post-adjustment area B21 in the first image data IM1 is a dimension in the X-axis direction in the image coordinate system. In Step S22, in the rectangular area B2 after the center-of-gravity area-width adjustment process, the width of the post-adjustment area B21 is adjusted, for the purpose of reducing a difference between the width of the upper body dictionary data D2 and the width of the post-adjustment area B21. The upper body dictionary data D2 is dictionary data obtained from the image data in which the upper body of the person appears. Thus, the width of the upper body dictionary data D2 is the same as that of the image data in which the features are extracted. On the other hand, the width of the post-adjustment area B21 may change depending on a size of the obstacle, a condition of the obstacle, and a positional relationship between the obstacle and the stereo camera 31. When the width of the post-adjustment area B21 is excessively large or small, the image processing device 41 adjusts the width of the post-adjustment area B21. Thus, the difference between the width of the upper body dictionary data D2 and the width of the post-adjustment area B21 are reduced. When the width of the post-adjustment area B21 in the world coordinate system is equal to or smaller than a predetermined lower limit value, the image processing device 41 increases the width of the post-adjustment area B21. When the width of the post-adjustment area B21 in the world coordinate system is equal to or greater than a predetermined upper limit value, the image processing device 41 decreases the width of the post-adjustment area B21.

As illustrated in FIG. 11, a second correction rate is associated with each of an upper limit value UL2 of the width of the post-adjustment area B21 in the world coordinate system and a lower limit value LL2 of the width of the post-adjustment area B21 in the world coordinate system. The upper limit value UL2 is 950 [mm]. A value smaller than one as the second correction rate is associated with the upper limit value UL2. The second correction rate associated with the upper limit value UL2 may be arbitrarily set within a range from 0.6 to 0.9, for example. In the example of FIG. 11, 0.8 as the second correction rate is associated with the upper limit value UL2. The lower limit value LL2 is 450 [mm]. A value greater than one as the second correction rate is associated with the lower limit value LL2. The second correction rate associated with the lower limit value LL2 may be arbitrarily set within a range from 1.1 to 1.3, for example. In the example of FIG. 11, 1.2 as the second correction rate is associated with the lower limit value LL2. 1.0 as the second correction rate is associated with a value within a range between the lower limit value LL2 and the upper limit value UL2.

The image processing device 41 derives the second correction rate from the width of the post-adjustment area B21 in the world coordinate system. When the width of the post-adjustment area B21 in the world coordinate system is equal to or greater than the upper limit value UL2, the image processing device 41 derives a value associated with the upper limit value UL2 as the second correction rate. When the width of the post-adjustment area B21 in the world coordinate system is equal to or smaller than the lower limit value LL2, the image processing device 41 derives a value associated with the lower limit value LL2 as the second correction rate. When the width of the post-adjustment area B21 in the world coordinate system is within a range between the upper limit value UL2 and the lower limit value LL2, the image processing device 41 derives 1.0 as the second correction rate.

The image processing device 41 sets a value obtained by multiplying the width of the post-adjustment area B21 by the second correction rate as a new value of the post-adjustment area B21. When the second correction rate is 1.0, the width of the post-adjustment area B21 is not adjusted. The second correction rate may be multiplied by the width of the post-adjustment area B21 in the first image data IM1. The second correction rate may be multiplied by the width of the post-adjustment area B21 in the world coordinate system. In this case, the width of the post-adjustment area B21 in the first image data IM1 is adjusted in accordance with the width of the post-adjustment area B21 in the world coordinate system. That is, the width of the post-adjustment area B21 in the first image data IM1 may be adjusted by any process as long as the adjustment of the width of the post-adjustment area B21 is performed. In the post-adjustment area B21 illustrated in FIG.

10, the width of the post-adjustment area B21 in the world coordinate system corresponds to a value within the range between the upper limit value UL2 and the lower limit value LL2. Therefore, the width of the post-adjustment area B21 in the first image data IM1 is not adjusted. A process in Step S22 is a width adjustment process.

The following will describe a case where a post-adjustment area B22 illustrated in FIG. 12 is obtained by the process in Step S21. The width of the post-adjustment area B22 in the world coordinate system is equal to or greater than the upper limit value UL2. A case where the width of the post-adjustment area B22 in the world coordinate system is equal to or greater than the upper limit value UL2 may correspond to a case where person's arms are extended. The image processing device 41 adjusts a width W21 of the post-adjustment area B22 of the first image data IM1 to a width W22 obtained by multiplying the width W21 by 0.8. The image processing device 41 performs adjustment such that the central position C1 of the post-adjustment area B22 in the width direction does not change before and after the image processing device 41 adjusts the width of the post-adjustment area B22.

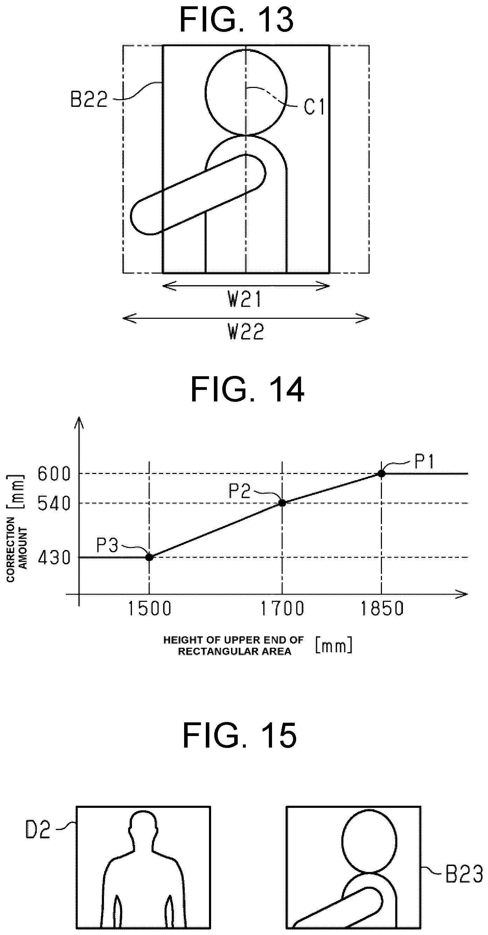

The following will describe a case where the post-adjustment area B22 illustrated in FIG. 13 is obtained by the process in Step S21. The width of the post-adjustment area B22 in the world coordinate system is equal to or smaller than the lower limit value LL2. A case where the width of the post-adjustment area B22 in the world coordinate system is equal to or smaller than the lower limit value LL2 may correspond to a case where an image of a person is captured from a side and a body and arms of the person are in the same line. The image processing device 41 adjusts a width W21 of the post-adjustment area B22 of the first image data IM1 to a width W22 obtained by multiplying the width W21 by 1.2. The image processing device 41 performs adjustment such that the central position C1 of the post-adjustment area B22 in the width direction does not change before and after the image processing device 41 adjusts the width of the post-adjustment area B22.

Next, in Step S23 as illustrated in FIG. 7, the image processing device 41 corrects a height of the post-adjustment area B21 in the first image data IM1. Specifically, the image processing device 41 corrects a position of a lower end of the post-adjustment area B21 in the first image data IM1, so that a part of the post-adjustment area B21 is taken out from the post-adjustment area B21 by a predetermined length from an upper end toward the lower end of the post-adjustment area B21. When an obstacle in the post-adjustment area B21 is a person, the image processing device 41 corrects the post-adjustment area B21 such that the lower end of the post-adjustment area B21 in the first image data IM1 corresponds to a position of a chest of the person. In this case, the upper end of the post-adjustment area B21 in the first image data IM1 corresponds to a position of a top of head of the person. A dimension of the post-adjustment area B21 in the Y-axis direction in the image coordinate system, that is, a height of the post-adjustment area B21 in the first image data IM1 is corrected so as to correspond to a range from the chest to the top of head of the person.

The range from the chest to the top of head of the person varies depending on a height of the person. The taller the person, the greater the range from the chest to top of head of the person. When the height of the person is 1850 [mm], generally, the chest is positioned 600 [mm] below the top of head. When the height of the person is 1700 [mm], generally, the chest is positioned 540 [mm] below the top of head. When the height of the person is 1500 [mm], generally, the chest is positioned 430 [mm] below the top of head. As described above, a general position of the chest can be recognized by the height of the person, and thus, the height of the post-adjustment area B21 is corrected in accordance with a position of the top of head of the person.

As illustrated in FIG. 14, the height of the upper end of the post-adjustment area B21 and a correction amount are associated with each other. A Z-coordinate Zw of the upper end of the post-adjustment area B21 has the same value as a Z-coordinate Zw of an upper end of the rectangular area B2. Thus, a height of the upper end of the rectangular area B2 and a correction amount are also associated with each other. When a height of the upper end of the post-adjustment area B21 serves as a reference point, the correction amount indicates a range of the rectangular area B2 in the world coordinate system from the reference point toward the lower end of the rectangular area B2. For example, when the height of the upper end of the post-adjustment area B21 is 1850 [mm], the correction amount is 600 [mm]. In this case, a height of the lower end of the post-adjustment area B21 is 1250 [mm], which is positioned 600 [mm] below from the height of the upper end of the post-adjustment area B21 that is 1850 [mm]. Then, a range of the post-adjustment area B21 in the world coordinate system is from 1850 [mm] to 1250 [mm]. In the present embodiment, three reference points P1 to P3 are each set for the height of the upper end of the post-adjustment area B21 and associated with a correction amount. The three reference points P1 to P3 correspond to a first reference point P1, a second reference point P2, and a third reference point P3, respectively. The first reference point P1 is 1850 [mm]. The second reference point P2 is 1700 [mm]. The third reference point P3 is 1500 [mm]. 600 [mm] as the correction amount is associated with the first reference point P1. 540 [mm] as the correction amount is associated with the second reference point P2. 430 [mm] as the correction amount is associated with the third reference point P3.

The image processing device 41 derives the correction amount from the Z-coordinate Zw of the upper end of the post-adjustment area B21. When the Z-coordinate Zw of the upper end of the post-adjustment area B21 is a height corresponding to each of the reference points P1 to P3, the image processing device 41 derives a value associated with each of the reference points P1 to P3 as the correction amount. As described above, when the Z-coordinate Zw of the upper end of the post-adjustment area B21 is 1850 [mm], the image processing device 41 derives 600 [mm] as the correction amount. When the Z-coordinate Zw of the upper end of the post-adjustment area B21 corresponds to a height between the reference points P1 to P3, the image processing device 41 derives the correction amount from a value associated with each of the reference points P1 to P3. For example, when the Z-coordinate Zw of the upper end of the post-adjustment area B21 corresponds to 1600 [mm], the image processing device 41 derives the correction amount based on a value associated with the second reference point P2 and a value associated with the third reference point P3. For example, the image processing device 41 only needs to derive the correction amount corresponding to 1600 [mm] from a linear function represented by the second reference point P2, the third reference point P3, the value associated with the second reference point P2, and the value associated with the third reference point P3. When the Z-coordinate Zw of the upper end of the post-adjustment area B21 corresponds to a height higher than the first reference point P1, the image processing device 41 derives a value associated with the first reference point P1 as the correction amount. When the Z-coordinate Zw of the upper end of the post-adjustment area B21 corresponds to a height lower than the third reference point P3, the image processing device 41 derives a value associated with the third reference point P3 as the correction amount.

The image processing device 41 uses the derived correction amount to correct the height of the lower end of the post-adjustment area B21. The image processing device 41 sets the height of the lower end of the post-adjustment area B21 at a position obtained by subtracting the correction amount from the height of the upper end of the post-adjustment area B21. As described above, when the height of the upper end of the post-adjustment area B21 is 1850 [mm], the height of the lower end of the post-adjustment area B21 is 1250 [mm] obtained by subtracting 600 [mm] from 1850 [mm].

The image processing device 41 derives the Y-coordinate Yi of the lower end of the post-adjustment area B21 in the first image data IM1 from the height of the lower end of the post-adjustment area B21 obtained by the correction amount. The image processing device 41 uses the Z-coordinate Zw corresponding to the height of the lower end of the post-adjustment area B21 obtained by the correction amount to derive camera coordinates of the lower end of the post-adjustment area B21 obtained by the correction amount. Furthermore, the camera coordinates are converted into coordinates of the first image data IM1, which derives the Y-coordinate Yi of the lower end of the post-adjustment area B21 in the first image data IM1. In an example of FIG. 4, the Y-coordinate Yi of the lower end of the post-adjustment area B21 in the first image data IM1 is corrected to a position indicated by a dashed-dotted line. The post-adjustment area B21 in which the position of the lower end of the post-adjustment area B21 in the first image data IM1 is corrected may be referred to as a post-correction area B23. The post-correction area B23 is an example of a post-adjustment area. A dimension L3 of the post-correction area B23 in the Y-axis direction in the image coordinate system is smaller than a dimension L4 of the post-adjustment area B21 in the Y-axis direction in the image coordinate system. The post-correction area B23 of the first image data IM1 is a part of the post-adjustment area B21 taken out from the post-adjustment area B21 by a predetermined length from the upper end toward the lower end of the post-adjustment area B21. The predetermined length has a value obtained by converting the correction amount into a dimension in the image coordinate system. Step S23 is a process in which a dimension of the post-adjustment area B21 in the first image data IM1 in the height direction is corrected in accordance with a height of the upper end of the rectangular area B2 from the road surface.

Next, in Step S24, as illustrated in FIG. 7, the image processing device 41 compares the post-correction area B23 with the upper body dictionary data D2. As illustrated in FIG. 15, the upper body dictionary data D2 is data representing features of an area corresponding to the post-correction area B23. In the present embodiment, the post-correction area B23 is an area above a position corresponding to the chest of the person. Therefore, the upper body dictionary data D2 is data representing features of the area above the position corresponding to the chest of the person. Specifically, the upper body dictionary data D2 is dictionary data obtained from image data of the area above the chest of the person. The image processing device 41 extracts features of the post-correction area B23 by the same process as features extraction used for obtaining the upper body dictionary data D2. In the present embodiment, HOG features are extracted from the post-correction area B23. Then, person detection is performed based on machine learning and pattern matching between the HOG features extracted from the post-correction area B23 and the upper body dictionary data D2 to determine whether the obstacle in the rectangular area B2 is a person. The upper body dictionary data D2 corresponds to upper body comparison data. After the determination of Step S24, the image processing device 41 terminates the upper body detection process S20 and the person detection process.

Control Performed by Controller in accordance with Position of Person

As described above, the position of the person existing around the forklift truck 10 is detected by the person detection process. The position of the person is outputted to the controller 20. The controller 20 may control the forklift truck 10 in accordance with the position of the person. For example, when a person exists within a predetermined range from the forklift truck 10, the controller 20 may limit a vehicle speed and may allow an alarm device to issue an alarm. The alarm may be issued to a person around the forklift truck 10, or a passenger of the forklift truck 10.

Operation

The following will describe an operation of the above-described embodiment.

When the displacement between the central position C1 of the rectangular area B2 in the width direction and the position of center of gravity G1 of the obstacle increases, accuracy of the person detection decreases. The image processing device 41 obtains the post-adjustment area B21 by adjusting the width of the rectangular area B2. The displacement between the central position of the post-adjustment area B21 in the width direction and the position of center of gravity G1 of the obstacle is smaller than the displacement between the central position C1 of the rectangular area B2 in the width direction and the position of center of gravity G1 of the obstacle.

Effects

The following will describe effects of the above-described embodiment.

(1) The image processing device 41 obtains the post-adjustment area B21 by adjusting the width of the rectangular area B2. Then, the image processing device 41 determines whether the obstacle in the rectangular area B2 is a person by comparing the post-correction area B23 obtained from the post-adjustment area B21 with the upper body dictionary data D2. When the whole-body dictionary data D1 and the upper body dictionary data D2 are obtained, generally, features are often obtained from image data in which the person is positioned at the central position of the image data in its width direction. That is, the whole-body dictionary data D1 and the upper body dictionary data D2 represent data of features in a state in which displacement between the position of center of gravity of the person and the central position of the image data in its width direction is small. Thus, as the displacement between the central position C1 of the rectangular area B2 in the width direction and the position of center of gravity G1 of the obstacle increases, the difference between features of the rectangular area B2 and the upper body dictionary data D2 decreases. This results in a decrease in the accuracy of the person detection. The displacement between the central position of the post-adjustment area B21 in the width direction and the position of center of gravity G1 of the obstacle is smaller than the displacement between the central position C1 of the rectangular area B2 in the width direction and the position of center of gravity G1 of the obstacle. Thus, the image processing device 41 determines whether the obstacle in the rectangular area B2 is a person by comparing the post-correction area B23 with the upper body dictionary data D2. As a result, the decrease in the accuracy of the person detection is suppressed.

(2) The image processing device 41 performs an upper body detection process for the rectangular area B2 that meets the upper body detection process condition. When the lower body of the person in the first image data IM1 is hidden by an obstruction, the upper body of the person appears in the first image data IM1. In the first image data IM1, the person whose lower body is hidden by the obstruction seems to be distanced from the road surface. When the person whose lower body is hidden by the obstruction is detected as an obstacle, the rectangular area B2 including the obstacle meets the upper body detection process condition. In the upper body detection process, the post-correction area B23 is compared with the upper body dictionary data D2. For the rectangular area B2 that meets the upper body detection process condition, when the post-correction area B23 is compared with the whole-body dictionary data D1, the image processing device 41 compares features of the upper body obtained from the post-correction area B23 with features of the whole body obtained from the whole-body dictionary data D1. In this case, the accuracy of the person detection decreases since the features at different positions are compared. On the other hand, in the upper body detection process, the features of the upper body obtained from the post-correction area B23 is compared with the features of the upper body obtained from the upper body dictionary data D2. Thus, the features at the same position are compared with each other, which suppresses the decrease in the accuracy of the person detection. In the above-described embodiment, although the counterweight 15 is an example of the obstruction, the obstruction may be any object other than the counterweight 15. Even in this case, the same effect is obtained by the same control as in the above-described embodiment. When the lower body of the person is not hidden by the obstruction and is positioned below the imaging range of the stereo camera 31, only the upper body of the person appears in the first image data IM1. Even in this case, the same effect is obtained by the same control as in the above-described embodiment.

(3) The person detection system 30 is mounted on the forklift truck 10. The forklift truck 10 is often used in an environment in which a person exists around the forklift truck 10. The person detection system 30 mounted on the forklift truck 10 needs to detect the person in a wide range. Therefore, of the person detection system 30 mounted on the forklift truck 10, a wide-angle stereo camera is often used as the stereo camera 31. When the wide-angle stereo camera 31 is used, distortion increases toward ends of the first image data IM1. This distortion may increase the displacement between the central position C1 of the rectangular area B2 in the width direction and the position of center of gravity G1 of the obstacle. On the other hand, the post-adjustment area B21 is obtained, which suppresses the decrease in the accuracy of the person detection due to the distortion. Therefore, the decrease in the accuracy detection of the person is suppressed even when the wide-angle stereo camera 31 is used.

In the person detection system 30 mounted on the forklift truck 10, a person near the forklift truck 10 needs to be detected by the stereo camera 31. On the other hand, the obstruction such as the counterweight 15 is easily included in the imaging range of the stereo camera 31 when the stereo camera 31 captures an image near the forklift truck 10. Thus, in the person detection system 30 mounted on the forklift truck 10, the lower body of the person is easily hidden by the forklift truck 10. Even when the lower body of the person is hidden by the forklift truck 10, the image processing device 41 of the person detection system 30 mounted on the forklift truck 10 performs the upper body detection process, which suppresses the decrease in the accuracy of the person detection.

(4) The width of the post-adjustment area B21 is derived from the equation (5). As a result of repeated experiments and simulations, inventors have discovered that the post-adjustment area B21 easily includes an entire width of a person in the width direction by derivation of the width of the post-adjustment area B21 from the equation (5). For example, when the width of the post-adjustment area B21 is smaller than the width derived from the equation (5), a part of the person in the width direction such as shoulders of the person may be beyond the post-adjustment area B21 depending on a position of the person. In this case, the accuracy of the person detection may decrease. The width derived from the equation (5) is set to a width of the post-adjustment area B21, so that the post-adjustment area B21 easily includes the entire view of the person in the width direction. Thus, the decrease in the accuracy of the person detection is suppressed.

(5) When the width of the post-adjustment area B21 in the world coordinate system is equal to or smaller than a predetermined lower limit value LL2, the image processing device 41 increases the width of the post-adjustment area B21 in the first image data IM1. When the width of the post-adjustment area B21 in the world coordinate system is equal to or greater than a predetermined upper limit value UL2, the image processing device 41 reduces the width of the post-adjustment area B21 in the first image data IM1. When the width of the post-adjustment area B21 in the world coordinate system is excessively large or small, the image processing device 41 adjusts the width of the post-adjustment area B21. Thus, the difference between the width of the upper body dictionary data D2 and the width of the post-adjustment area B21 is reduced. As a result, the decrease in the accuracy of the person detection is suppressed.

(6) The image processing device 41 corrects a dimension of the post-adjustment area B21 in the height direction in the first image data IM1 in accordance with a height of the upper end of the rectangular area B2 from the road surface, which obtains the post-correction area B23 in which the height of the post-adjustment area B21 is corrected. In the present embodiment, the post-correction area B23 is an area above the position corresponding to the chest of the person. The height of the post-adjustment area B21 is corrected in accordance with the upper body dictionary data D2, which improves the accuracy of the person detection.

(7) A person detection process using a deep learning may be performed to suppress the decrease in the accuracy of the person detection. In this case, high-performance hardware is required. On the other hand, in the present embodiment, the person detection process is performed using the whole-body dictionary data D1 and the upper body dictionary data D2. Thus, an increase in a manufacturing cost is suppressed without using the high-performance hardware.

(8) In order to extract the rectangular area B2 in which a lower part of the obstacle is hidden by the obstruction, whether the rectangular area B2 includes many areas having different disparities may be calculated. For example, when the lower body of the person is hidden by the obstruction, a disparity caused by the obstruction and a disparity caused by the person are mixed in the rectangular area B2. Thus, the rectangular area B2 includes many areas having different disparities. However, in this case, even when the rectangular area B2 simply includes two obstacles, it may be determined that the rectangular area B2 includes many areas having different disparities. That is, even when the lower part of the obstacle is not hidden by the obstruction, the rectangular area B2 may be extracted as an area in which the lower part of the obstacle is hidden by the obstruction. On the other hand, in the present embodiment, in accordance with whether the obstacle is distanced from the road surface, the rectangular area B2 in which the lower part of the obstacle is hidden by the obstruction is extracted. Thus, the rectangular area B2 in which the lower part of the obstacle is hidden by the obstruction is appropriately detected.

Modified Embodiment

The above-described embodiment may be modified and implemented as follows. The embodiment and the following modified embodiment may be implemented in combination with each other to the extent that there is no technical contradiction.

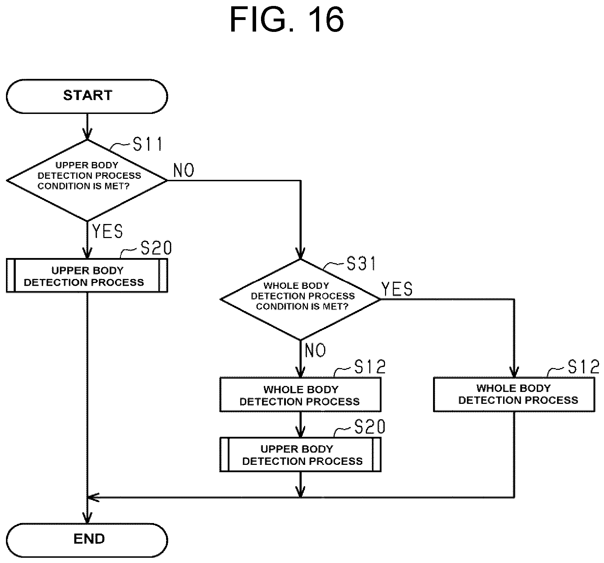

As illustrated in FIG. 16, when the determination result in Step S11 is NO, the image processing device 41 may perform a process of Step S31. In Step S31, the image processing device 41 determines whether a rectangular area meets the whole-body detection process condition. This rectangular area for which the determination is performed in Step S31 corresponds to a rectangular area that does not meet the upper body detection process condition. In the embodiment, it is determined whether the rectangular area B1 meets the whole-body detection process condition. A first predetermined height is a predetermined height that is set as a separation condition of the upper body detection process condition. In the whole-body detection process condition, a height at which the obstacle is distanced from the road surface is lower than a second predetermined height. The second predetermined height is lower than the first predetermined height. The second predetermined height may be arbitrarily set within a range from 200 [mm] to 400 [mm], for example. The first predetermined height may be arbitrarily set within a range from 600 [mm] to 1000 [mm], for example. When the determination result in Step S31 is YES, that is, when the rectangular area meets the whole-body detection process condition, the image processing device 41 performs the process in Step S12. When the determination result in Step S31 is NO, that is, when the rectangular area meets the whole-body detection process condition, the image processing device 41 performs the process in Step S12 and the upper body detection process S20. That is, the process in Step S12 and the upper body detection process S20 are performed for the rectangular area including an obstacle whose height distanced from the road surface is smaller than the first predetermined height and is equal to or greater than the second predetermined height. In this case, when the obstacle is determined to be a person in at least one of the process in Step S12 and the upper body detection process S20, the obstacle in the rectangular area is determined to be a person.

The memory 43 may store only the whole-body dictionary data D1 corresponding to the dictionary data. In this case, in Step S24, the image processing device 41 compares the post-correction area B23 with the whole-body dictionary data D1. The post-correction area B23 is compared with the whole-body dictionary data D1 using an area above a position of the whole-body dictionary data D1 corresponding to the chest of the person, that is, using an area representing a portion of the whole-body dictionary data D1 corresponding to the post-correction area B23 obtained from the image data in which the whole body of the person appears. As illustrated in FIG. 6, for example, comparison is performed using an area D11 of the whole-body dictionary data D1 from the upper end to a position corresponding to the chest of the person. The area D11 serves as upper body comparison data. The image processing device 41 extracts features of the post-correction area B23. Then, whether the obstacle in the rectangular area B2 is a person is determined by the person detection based on a machine learning and a pattern matching between the features extracted from the post-correction area B23 and the area D11.

When the post-correction area B23 is compared with the whole-body dictionary data D1, in Step S23 of the upper body detection process S20, the image processing device 41 may perform a detection process of an area ratio instead of correction of the height of the post-adjustment area B21. The area ratio means a ratio of a dimension of the lower end to the upper end of the post-adjustment area B21 to the height of a top of the obstacle. The height of the top of the obstacle is obtained from the Z-coordinate $Zw$ of the upper end of the post-adjustment area B21. The area ratio is obtained by dividing a dimension between the Z-coordinate $Zw$ of the upper end of the post-adjustment area B21 and the Z-coordinate $Zw$ of the lower end of the post-adjustment area B21 by a height corresponding to the Z-coordinate $Zw$ of the upper end of the post-adjustment area B21. The image processing device 41 detects the area ratio from the height of the lower end of the post-adjustment area B21 from the road surface and the height of the upper end of the post-adjustment area B21 from the road surface. In Step S24 of the upper body detection process S20, the image processing device 41 performs a process in which the post-adjustment area B21 is compared with an area obtained by applying the area ratio to the whole-body dictionary data D1. Applying the area ratio to the whole-body dictionary data D1 means that an area in a direction from the upper end toward the lower end of the whole-body dictionary data D1 corresponding to the area ratio is taken out. Thus, when the obstacle in the post-adjustment area B21 is a person, an area corresponding to the person is obtained. An area obtained by applying the area ratio to the whole-body dictionary data D1 serves as upper body comparison data.

The distance condition may be set such that the distance from the forklift truck 10 to the obstacle is within a predetermined distance from the stereo camera 31. In this case, the predetermined distance is simply required to correspond to a length in which the distance L1 is added to the predetermined distance of the above-described embodiment.

In Step S23, the image processing device 41 may correct the post-adjustment area B21 such that the lower end of the post-adjustment area B21 in the first image data IM1 corresponds to a position other than the chest of the person. The image processing device 41 may correct the post-adjustment area B21 such that the lower end of the post-adjustment area B21 in the first image data IM1 corresponds to a neck or a stomach of the person, for example. In this case, the upper body dictionary data D2 is preferably generated using image data in which a part above the neck of the person appears or image data in which a part above the stomach of the person appears.

In Step S22, when the width of the post-adjustment area B21 in the world coordinate system is equal to or smaller than the lower limit value LL2, the image processing device 41 may add a predetermined value to the width of the post-adjustment area B21 in the first image data IM1 to increase the width of the post-adjustment area B21. The predetermined value may be a fixed value or a variable value that increases as the width of the post-adjustment area B21 in the world coordinate system decreases. When the width of the post-adjustment area B21 in the world coordinate system is equal to or greater than the upper limit value UL2, the image processing device 41 may subtract a predetermined value from the width of the post-adjustment area B21 in the first image data IM1 to decrease the width of the post-adjustment area B21. The predetermined value may be a fixed value or a variable value that decreases as the width of the post-adjustment area B21 in the world coordinate system increases.

In Step S22, the image processing device 41 may adjust the width of the post-adjustment area B21 in accordance with the width of the post-adjustment area B21 in the image coordinate system.

Step S23 may be performed before Step S21. In this case, the rectangular area B2 is corrected in accordance with the height from the road surface. In Step S21, the width of the rectangular area B2 after the dimensional correction thereof in the Y-axis direction is adjusted. In this case, the post-adjustment area B21 after the dimensional correction thereof in the Y-axis direction is obtained. Thus, even in this case, the dimension of the post-adjustment area B21 in the height direction in the first image data IM1 is corrected.

The image processing device 41 may derive the width W11 from an equation in which the first correction rate is omitted from the equation (5).

The image processing device 41 may adjust the width of the rectangular area B2 by any method as long as the displacement between the central position of the post-adjustment area B21 in the width direction and the position of center of gravity G1 of the obstacle is smaller than the displacement between the central position C1 of the rectangular area B2 in the width direction and the position of center of gravity G1 of the obstacle.

The image processing device 41 need not perform a process of Step S23.

The image processing device 41 need not perform a process of Step S21.

In Step S22, the image processing device 41 may perform one of a process in which the width of the post-adjustment area B21 increases when the width of the post-adjustment area B21 in the world coordinate system is equal to or smaller than a predetermined lower limit value LL2, and a process in which the width of the post-adjustment area B21 decreases when the width of the post-adjustment area B21 in the world coordinate system is equal to or greater than a predetermined upper limit value UL2. In Step S22, the upper limit value UL2 need not be set when the image processing device 41 performs only the process in which the width of the post-adjustment area B21 increases in a case in which the width of the post-adjustment area B21 in the world coordinate system is equal to or smaller than the predetermined lower limit value LL2. In this case, when the width of the post-adjustment area B21 in the world coordinate system is greater than the lower limit value LL2, 1.0 is simply required to be derived as the second correction rate. In Step S22, the lower limit value LL2 need not be set when the image processing device 41 performs only the process in which the width of the post-adjustment area B21 decreases in a case in which the width of the post-adjustment area B21 in the world coordinate system is equal to or greater than the predetermined upper limit value UL2. In this case, when the width of the post-adjustment area B21 in the world coordinate system is smaller than the upper limit value UL2, 1.0 is simply required to be derived as the second correction rate.

When the determination result in Step S11 is NO, the image processing device 41 may perform the process of Step S21. That is, the image processing device 41 may adjust the width of the rectangular area using the position of center of gravity G1 even for the rectangular area that does not meet the upper body detection process condition. In this case, the image processing device 41 may perform the process of Step S22 for the rectangular area that does not meet the upper body detection process condition. The image processing device 41 may compare the rectangular area whose width is adjusted with the whole-body dictionary data D1, or may compare the rectangular area whose width is not adjusted with the whole-body dictionary data D1. In any case, for the rectangular area that does not meet the upper body detection process condition, the image processing device 41 determines whether the obstacle in the rectangular area is a person by comparing the rectangular area of the first image data IM1 with the whole-body dictionary data D1.

When the process of Step S21 is performed in a case in which the determination result in Step S11 is NO, the processes of Step S21 and Step S22 need not be performed in the upper body detection process. That is, the center-of-gravity area-width adjustment process is simply required to be performed for at least one of the rectangular area that meets the upper body detection process condition and the rectangular area that does not meet the upper body detection process condition.

The image processing device 41 need not determine whether the rectangular area meets the upper body detection process condition. In this case, the processes of Step S21 and Step S22 are performed for all rectangular areas. The image processing device 41 determines whether an obstacle in each rectangular area is a person by comparing a post-adjustment area in which the processes of Step S21 and Step S22 are performed for each rectangular area with the whole-body dictionary data D1. Even in this case, the width of the rectangular area is adjusted, so that the decrease in the accuracy of the person detection is suppressed.

The stereo camera 31 may be mounted such that the counterweight 15 is not included in the imaging range.

An area in which the obstacle appears in the first image data IM1 may have any shape other than the rectangular shape, such as a circular shape.

The person detection system 30 may detect a person in front of the forklift truck 10. In this case, the stereo camera 31 is mounted so as to capture an image of an area in front of the forklift truck 10. The person detection system 30 may detect both a person in front of the forklift truck 10 and a person in the rear of the forklift truck 10. In this case, two stereo cameras 31 for capturing images of the area in front of the forklift truck 10 and an area in the rear of the forklift truck 10 may be mounted on the forklift truck 10.

The conversion from the camera coordinates into the world coordinates may be performed using table data. The table data includes table data in which the Y-coordinate Yw is associated with combination of the Y-coordinate Yc and the Z-coordinate Zc, and table data in which the Z-coordinate Zw is associated with combination of the Y-coordinate Yc and the Z-coordinate Zc. The table data is stored in the memory 43 of the image processing device 41, so that the Y-coordinate Yw and the Z-coordinate Zw in the world coordinate system are calculated from the Y-coordinate Yc and the Z-coordinate Zc in the camera coordinate system. In the above-described embodiment, since the X-coordinate Xc in the camera coordinate system coincides with the X-coordinate Xw in the world coordinate system, the table data for calculating the X-coordinate Xw is not stored.

The world coordinate system is not limited to a cartesian coordinate system, and may be a polar coordinate system.

Any camera may be used as long as world coordinates of an obstacle can be derived from image data obtained by the camera. For example, a monocular camera or a ToF (Time of Flight) camera may be used.

The forklift truck 10 may be an engine-type forklift truck.

The stereo camera 31 may be mounted at any position such as the cargo handling apparatus 17.

The moving body may be an industrial vehicle other than the forklift truck 10 such as a towing tractor. The moving body may be any vehicle such as a passenger car, a transport vehicle, construction equipment, or a flight vehicle.

## Claims

1. An image processing device (41) of a person detection system (30) mounted on a moving body (10), wherein the image processing device (41) is configured to:

   detect, in image data obtained from a camera (31), an area (B1, B2) of the image data in which an obstacle appears;
   perform a center-of-gravity area-width adjustment process in which a position of center of gravity (G1) of the obstacle in the area (B2) of the image data is estimated and a width (W1) of the area (B2) of the image data is adjusted based on the position of center of gravity (G1); and
   determine whether the obstacle in the area (B2) is a person by comparing a post-adjustment area (B21), obtained after the center-of-gravity area-width adjustment process is performed, with dictionary data (D2).

2. The image processing device (41) of the person detection system (30) according to claim 1, wherein

   the dictionary data includes upper body comparison data (D2) and whole-body comparison data (D1),
   the image processing device (41) is configured to:

   determine whether the area (B1, B2) meets an upper body detection process condition that the obstacle in the area (B1, B2) is distanced from a road surface within a predetermined range from the camera (31);
   perform, for the area (B2) that meets the upper body detection process condition, an upper body detection process in which the post-adjustment area (B21) after the center-of-gravity area-width adjustment process is performed for the area (B2) of the image data is compared with the upper body comparison data (D2) to determine whether the obstacle in the area (B2) is a person; and
   perform, for the area (B1) that does not meet the upper body detection process condition, a whole-body detection process in which the area (B1) of the image data is compared with the whole-body comparison data (D1) to determine whether the obstacle in the area (B1) is a person.

3. The image processing device (41) of the person detection system (30) according to claim 1 or 2, wherein in the center-of-gravity area-width adjustment process, a width of the post-adjustment area (B21) is set by adding a value based on a difference ($\triangle$G) between the position of center of gravity (G1) and a central position (C1) of the area (B2) in a width direction of the area (B2) to a doubled value of a length of a distance (W2) from the position of center of gravity (G1) to one end of the area (B2) in the width direction closer to the position of center of gravity (G1) than to the other end of the area (B2), in the area (B2) of the image data.

**4.** The image processing device (41) of the person detection system (30) according to any one of claims 1 to 3, wherein

the image processing device (41) performs a width adjustment process for the post-adjustment area (B21), and in the width adjustment process, the image processing device (41) performs at least one of a process in which a width of the post-adjustment area (B21) of the image data increases when the width of the post-adjustment area (B21) is equal to or smaller than a predetermined lower limit value (LL2), and a process in which the width of the post-adjustment area (B21) of the image data decreases when the width of the post-adjustment area (B21) is equal to or greater than a predetermined upper limit value (UL2).

**5.** The image processing device (41) of the person detection system (30) according to claim 2, wherein

the image processing device (41) detects a height of an upper end of the area (B2) from the road surface, and in the upper body detection process, a dimension of the post-adjustment area (B21) in a height direction of the post-adjustment area (B21) of the image data is corrected in accordance with the height of the upper end of the area (B2) from the road surface.


**Patentansprüche**

**1.** Bildverarbeitungsvorrichtung (41) eines an einem beweglichen Körper (10) angebrachten Personenerkennungssystems (30), wobei
die Bildverarbeitungsvorrichtung (41) ausgebildet ist, um:

in von einer Kamera (31) erhaltenen Bilddaten einen Bereich (B1, B2) der Bilddaten zu erkennen, in dem ein Hindernis erscheint;
einen Schwerpunkt-Bereichsbreitenanpassungsprozess auszuführen, in dem eine Position eines Schwerpunkts (G1) des Hindernisses in dem Bereich (B2) der Bilddaten geschätzt wird und eine Breite (W1) des Bereichs (B2) der Bilddaten basierend auf der Position des Schwerpunkts (G1) angepasst wird; und
zu bestimmen, ob das Hindernis in dem Bereich (B2) eine Person ist, indem ein nach der Anpassung vorliegender Bereich (B21), der erhalten wird, nachdem der Schwerpunkt-Bereichsbreitenanpassungsprozess durchgeführt worden ist, mit Wörterbuchdaten (D2) verglichen wird.

**2.** Bildverarbeitungsvorrichtung (41) des Personenerkennungssystems (30) nach Anspruch 1, wobei

die Wörterbuchdaten Oberkörpervergleichsdaten (D2) und Ganzkörpervergleichsdaten (D1) einschließen, die Bildverarbeitungsvorrichtung (41) ausgebildet ist, um:

zu bestimmen, ob der Bereich (B1, B2) eine Oberkörpererkennungsprozessbedingung erfüllt, dass das Hindernis in dem Bereich (B1, B2) von einer Fahrbahnoberfläche in einem vorgegebenen Bereich von der Kamera (31) entfernt ist;
für den Bereich (B2), der die Oberkörpererkennungsprozessbedingung erfüllt, einen Oberkörpererkennungsprozess durchzuführen, in dem der nach der Anpassung vorliegende Bereich (B21), nachdem der Schwerpunkt-Bereichsbreitenanpassungsprozess für den Bereich (B2) der Bilddaten durchgeführt worden ist, mit den Oberkörpervergleichsdaten (D2) verglichen wird, um zu bestimmen, ob das Hindernis in dem Bereich (B2) eine Person ist; und
für den Bereich (B1), der die Oberkörpererkennungsprozessbedingung nicht erfüllt, einen Ganzkörpererkennungsprozess durchzuführen, in dem der Bereich (B1) der Bilddaten mit den Ganzkörpervergleichsdaten (D1) verglichen wird, um zu bestimmen, ob das Hindernis in dem Bereich (B1) eine Person ist.

**3.** Bildverarbeitungsvorrichtung (41) des Personenerkennungssystems (30) nach Anspruch 1 oder 2, wobei
in dem Schwerpunkt-Bereichsbreitenanpassungsprozess eine Breite des nach der Anpassung vorliegenden Bereichs (B21) dadurch eingestellt wird, dass zu einem verdoppelten Wert einer Länge eines Abstands (W2) von der Position des Schwerpunkts (G1) zu einem Ende des Bereichs (B2) in der Breitenrichtung, das der Position des Schwerpunkts (G1) näher ist als das andere Ende des Bereichs (B2), ein Wert addiert wird, der auf einer Differenz ($\Delta$G) zwischen der Position des Schwerpunkts (G1) und einer Zentralposition (C1) des Bereichs (B2) in einer Breitenrichtung des Bereichs (B2) basiert, in dem Bereich (B2) der Bilddaten.

**4.** Bildverarbeitungsvorrichtung (41) des Personenerkennungssystems (30) nach einem der Ansprüche 1 bis 3, wobei

die Bildverarbeitungsvorrichtung (41) für den nach der Anpassung vorliegenden Bereich (B21) einen Breitenanpassungsprozess ausführt, und

in dem Breitenanpassungsprozess die Bildverarbeitungsvorrichtung (41) Folgendes ausführt: mindestens einen von einem Prozess, in dem eine Breite des nach der Anpassung vorliegenden Bereichs (B21) der Bilddaten zunimmt, wenn die Breite des nach der Anpassung vorliegenden Bereichs (B21) gleich einem vorgegebenen unteren Grenzwert (LL2) ist oder kleiner als der vorgegebene untere Grenzwert (LL2) ist, und einem Prozess, in dem die Breite des nach der Anpassung vorliegenden Bereichs (B21) der Bilddaten abnimmt, wenn die Breite des nach der Anpassung vorliegenden Bereichs (B21) gleich einem vorgegebenen oberen Grenzwert (UL2) ist oder größer als der vorgegebene obere Grenzwert (UL2) ist.

5. Bildverarbeitungsvorrichtung (41) des Personenerkennungssystems (30) nach Anspruch 2, wobei

die Bildverarbeitungsvorrichtung (41) eine Höhe eines oberen Endes des Bereichs (B2) von der Fahrbahnoberfläche erfasst, und

in dem Oberkörpererkennungsprozess eine Abmessung des nach der Anpassung vorliegenden Bereichs (B21) in einer Höhenrichtung des nach der Anpassung vorliegenden Bereichs (B21) der Bilddaten in Übereinstimmung mit der Höhe des oberen Endes des Bereichs (B2) von der Fahrbahnoberfläche korrigiert wird.

**Revendications**

1. Dispositif de traitement d'image (41) d'un système de détection de personne (30) monté sur un corps mobile (10), dans lequel

le dispositif de traitement d'image (41) est configuré pour :

détecter, dans des données d'image obtenues à partir d'une caméra (31), une zone (B1, B2) des données d'image dans laquelle un obstacle apparaît ;

réaliser un processus d'ajustement de largeur de zone de centre de gravité dans lequel une position de centre de gravité (G1) de l'obstacle dans la zone (B2) des données d'image est estimée et une largeur (W1) de la zone (B2) des données d'image est ajustée sur la base de la position de centre de gravité (G1) ; et

déterminer si l'obstacle dans la zone (B2) est une personne par comparaison d'une zone post-ajustement (B21), obtenue après que le processus d'ajustement de largeur de zone de centre de gravité est réalisé, avec des données de dictionnaire (D2).

2. Dispositif de traitement d'image (41) du système de détection de personne (30) selon la revendication 1, dans lequel

les données de dictionnaire incluent des données de comparaison de haut de corps (D2) et des données de comparaison de corps entier (D1),

le dispositif de traitement d'image (41) est configuré pour :

déterminer si la zone (B1, B2) remplit une condition de processus de détection de haut de corps selon laquelle l'obstacle dans la zone (B1, B2) est espacé d'une surface de route dans une plage prédéterminée à partir de la caméra (31) ;

réaliser, pour la zone (B2) qui remplit la condition de processus de détection de haut de corps, un processus de détection de haut de corps dans lequel la zone post-ajustement (B21) après que le processus d'ajustement de largeur de zone de centre de gravité est réalisé pour la zone (B2) des données d'image est comparée avec les données de comparaison de haut de corps (D2) pour déterminer si l'obstacle dans la zone (B2) est une personne ; et

réaliser, pour la zone (B1) qui ne remplit pas la condition de processus de détection de haut de corps, un processus de détection de corps entier dans lequel la zone (B1) des données d'image est comparée avec les données de comparaison de corps entier (D1) pour déterminer si l'obstacle dans la zone (B1) est une personne.

3. Dispositif de traitement d'image (41) du système de détection de personne (30) selon la revendication 1 ou 2, dans lequel

dans le processus d'ajustement de largeur de zone de centre de gravité, une largeur de la zone post-ajustement (B21) est définie par ajout d'une valeur basée sur une différence ($\Delta G$) entre la position de centre de gravité (G1) et une position centrale (C1) de la zone (B2) dans une direction de largeur de la zone (B2) à une valeur doublée d'une longueur d'une distance (W2) à partir de la position de centre de gravité (G1) jusqu'à une extrémité de la zone (B2) dans la direction de largeur plus proche de la position de centre de gravité (G1) que l'autre extrémité de la zone (B2), dans la zone (B2) des données d'image.

4. Dispositif de traitement d'image (41) du système de détection de personne (30) selon l'une quelconque des revendications 1 à 3, dans lequel

le dispositif de traitement d'image (41) réalise un processus d'ajustement de largeur pour la zone post-ajustement (B21), et
dans le processus d'ajustement de largeur, le dispositif de traitement d'image (41) réalise au moins un d'un processus dans lequel une largeur de la zone post-ajustement (B21) des données d'image augmente lorsque la largeur de la zone post-ajustement (B21) est égale ou inférieure à une valeur limite inférieure prédéterminée (LL2), et un processus dans lequel la largeur de la zone post-ajustement (B21) des données d'image diminue lorsque la largeur de la zone post-ajustement (B21) est égale ou supérieure à une valeur limite supérieure prédéterminée (UL2).

5. Dispositif de traitement d'image (41) du système de détection de personne (30) selon la revendication 2, dans lequel

le dispositif de traitement d'image (41) détecte une hauteur d'une extrémité supérieure de la zone (B2) à partir de la surface de route, et
dans le processus de détection de haut de corps, une dimension de la zone post-ajustement (B21) dans une direction de hauteur de la zone post-ajustement (B21) des données d'image est corrigée conformément à la hauteur de l'extrémité supérieure de la zone (B2) à partir de la surface de la route.

# FIG. 1

# FIG. 2

# FIG. 3

START

OBTAIN IMAGE DATA ~ S1

OBTAIN DISPARITY IMAGE ~ S2

DERIVE WORLD COORDINATES OF FEATURE POINTS ~ S3

EXTRACT OBSTACLE ~ S4

DERIVE OBSTACLE POSITION ~ S5

DETECT RECTANGULAR AREA ~ S6

END

# FIG. 4

# FIG. 5

```
        ┌─────────────┐
        │    START    │
        └──────┬──────┘
               │
               ▼          S11
          ╱─────────╲
         ╱ UPPER BODY ╲        NO
        ╱ DETECTION    ╲──────────────────┐
        ╲ PROCESS      ╱                   │
         ╲CONDITION IS╱                    │
          ╲  MET?   ╱                      │
            ╲─────╱                        │
               │ YES                       │
               ▼         S20               ▼           S12
    ┌──────────────────┐        ┌──────────────────┐
    │║  UPPER BODY    ║│        │   WHOLE BODY     │
    │║ DETECTION PROCESS║│      │ DETECTION PROCESS │
    └──────────────────┘        └──────────────────┘
               │                           │
               ◄───────────────────────────┘
               ▼
        ┌─────────────┐
        │     END     │
        └─────────────┘
```

# FIG. 6

# FIG. 7

START UPPER BODY
DETECTION PROCESS

↓

ADJUST WIDTH OF
RECTANGULAR AREA — S21

↓

ADJUST WIDTH OF
POST-ADJUSTMENT AREA — S22

↓

ADJUST HEIGHT OF
POST-ADJUSTMENT AREA — S23

↓

COMPARE POST-ADJUSTMENT AREA
WITH UPPER BODY DICTIONARY DATA — S24

↓

END

# FIG. 8

# FIG. 9

# FIG. 10

C1

G1

B21

ΔG    W2    W2

W11

# FIG. 11

SECOND CORRECTION RATE

1.2 ────● LL2

1

0.8 ────────────────● UL2

450    950

WIDTH OF
POST-ADJUSTMENT AREA  [mm]

# FIG. 12

B22

C1

W22

W21

# FIG. 13

# FIG. 14

# FIG. 15

# FIG. 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020135616 A

- EP 2224743 A1

**Non-patent literature cited in the description**

- An integrated driver warning system for driver and pedestrian safety. **CHIEN JONG-CHIH et al.** Applied Soft Computing. Elsevier, 05 July 2023, vol. 13, 4413-4427